# EUROPEAN PATENT SPECIFICATION

(11) **EP 3 301 420 B1**
(45) Date of publication and mention of the grant of the patent: **03.04.2019**
(21) Application number: 16191441.1
(22) Date of filing: 29.09.2016
(51) Int. Cl.: G01K 1/10

(54) **TEMPERATURE SENSING ASSEMBLY WITH HIGH RESISTANCE TO AGGRESSIVE GASES**
TEMPERATURMESSANORDNUNG MIT HOHER BESTÄNDIGKEIT GEGEN AGGRESSIVE GASE
ENSEMBLE DE DETECTION DE TEMPÉRATURE HAUTEMENT RESISTANT AUX GAZ AGRESSIFS

(43) Date of publication of application: 04.04.2018
(73) Proprietor: ENDRESS + HAUSER WETZER GmbH + Co. KG, 87484 Nesselwang (DE)
(72) Inventor: Palma, Luca, 20080 Zibido San Giaco (IT)
(74) Representative: Andres, Angelika Maria

(56) References cited:
- EP-A1- 2 884 250
- EP-A1- 2 884 251
- CN-U- 202 562 649
- GB-A- 1 151 019
- US-A- 4 747 883
- US-A1- 2016 178 448

## Description

The present invention concerns a sensing assembly, preferably for sensing a temperature as well as a method for fabricating such a sensing assembly. The sensing assembly is preferably a measuring device, e. g. a thermometer, and preferably used for high temperature applications, e. g. in reactors.

A very critical issue for measuring devices in reactors for example in Oil & Gas or Chemical Industries is the contamination of the sensitive part or parts of sensors or probes by gases coming from the process. In order to protect the sensitive part/parts, probes or sensors are usually built up by different layers of different materials. Typical classes of materials used are metals and ceramics. Especially at high temperature, aggressive process gases like chlorides, sulfides, e.g. hydrogen sulfide, hydrocarbons, oxides, e. g. sulfur oxides, but also oxygen and hydrogen, can cross the different protective layers and enter into the sensitive part/parts of the probe. For instance, this may be due to the fact that ceramics can become porous at high temperature. The diffusion and/or permeation phenomenon can cause corrosion and can lead to the drifting or even loss of measuring point. Consequently, thermocouple failure is a frequent occurrence under the severe conditions encountered e.g. in a reactor, so that it is very important to further protect the inner part/parts of the sensors. For example, in industrial thermometers often used C-type thermocouples are very sensitive to oxygen so that it is necessary to realize corresponding measuring devices as to be able to scavenge them from oxygen.

A measuring device for use in a hostile environment comprising a thermocouple temperature monitor has become known from the European Patent Application EP 356593 A1. The thermocouple wires are enclosed in a gas-tight metal protection sheath which is inserted inside a multi-segment refractory thermal well. An annular space formed between the sheath and the thermal well is continuously purged with a small quantity of a gas. Hence gasification products residing from the process are neutralized within the annular space by reaction with the purging gas.

In order to be independent from gas conduits needed for purging of the gas through the annular space, the European patent application EP2884250 A1 introduces a stand-alone modular system for pressure compensation of a thermowell and protection of a thermometer, an assembly, a kit of parts and a method for providing a pressure compensation for a thermowell. The stand-alone modular system comprises a gas container, which is filled with a limited amount of a, preferably inert, gas and which serves as a pressure reservoir for the thermowell. Furthermore, a pressure regulating element is connectable to the thermowell and to the container in a gas tight and pressure tight manner and serves for regulating the pressure in the thermowell to a predetermined pressure value. In the following, reference is made to the entire content of the European patent application EP2884250 A1.

Similar thermocouple assemblies, in particular for use in process plants, are disclosed in the European patent application EP2884251 A1 and its divisional application EP3012606 A1. The respective installations have in common that the measuring inserts are replaceable directly in the field without the need of shutting down the process. For this purpose, two interconnectable mounting parts with an inlet and outlet for a purging gas, which are embodied for receiving a measuring insert, are provided. The mounting parts have two chambers, a first chamber, for receiving an electrical connection, and a second chamber, for receiving a shaft portion of the measuring insert. When mechanically connected, the two chambers communicate via an opening between the two mounting parts, through which opening the shaft portion of the measuring insert is insertable. Thus, the entire thermometric device allows the use of a sensing element (insert) in harmful conditions avoiding the contact with polluting elements e.g. via a purging gas that flows through the insert itself. In the following, reference is also made to the entire content of the European patent applications EP2884251 A1 and EP3012606 A1. In this context, reference is also made to US4747883 A. However, by means of a purging gas flow through the thermowell, oxidation and/or contamination of the inner part/parts of the sensor, e.g. the thermocouple wires, can only be reduced. Hence, damage of the inner sensor part/parts and occurrence of the associated problems regarding drift and/or loss of the measuring point and/or e. g. changes of the electro motive force (EMF) of the thermocouple wires can only be prevented for a limited amount of time, typically for a range of approximately one month.

Hence, it is an object of the present invention to provide a sensing assembly featuring an increased life time when operated in a hostile environment. This object is achieved by means of a sensing assembly according to claim 1 and by a method for fabricating such sensing assembly according to claim 16.

The sensing assembly for sensing a temperature, according to the present invention comprises at least
- one measuring insert, preferably for sensing a temperature,
- one, preferably pre-formed, fitting at least partially surrounding the measuring insert,
- one protective tube, wherein the measuring insert and the pre-formed fitting are positioned within an inner cavity of the protective tube such, that an intermediate chamber is formed, and
- gas conduit means comprising at least a gas-inlet and a gas-outlet both at least connected to the intermediate chamber, wherein at least the intermediate chamber can be purged by means of a purging gas via the gas conduit means.

According to the present invention, the sensing assembly comprises at least one adsorbing unit, which is at least partially comprised of a getter material, and positioned at least partially surrounding the measuring insert (6).

Getter materials are comprised by at least one, in particular chemically, reactive material. They serve for scavenging unwanted gaseous contaminants by means of adsorption, absorption and/or chemical binding. Getters exist in various compositions and forms. For instance, evaporable and non-evaporable getters are known, wherein the latter type typically is available in the form of a coating or as a bulk material. Getter materials are mainly applied for maintaining a vacuum, e. g. in getter pumps, sorption pumps and also ion getter pumps. However, getter materials are also frequently used in combination with measuring devices, e. g. pressure measuring devices, where the getter materials prevent reactive gases from causing damage in closed evacuated volumes inside the measuring device, e. g. disclosed in the patent applications DE102007021875A1, DE2901636 A1 or US6837111 B2.

When it comes to a thermometer, GB1151019 A suggests a device wherein a measuring element body is connected to a tube consisting of fireproof ceramic material. The tube is filled with ceramic or metal-ceramic, good heat-resistant substances, to which getter substances, advantageously in powder form, are preferably added in order to take oxygen from the diffusing air. In this context, reference is also made to CN202562649 U.

The present invention now combines different attempts to prevent reactive gases to reach the sensitive parts of the measuring insert. At least the intermediate chamber can be purged by means of a purging gas via the gas-conduit means. Additionally, at least one adsorbing unit is placed at least partially, preferably fully, inside the protective tube. The adsorbing unit may be preferably embodied in the form of a solid body and/or preferably with a shape adapted to the geometry of the sensing assembly and at least partially positioned inside the thermowell. It may be e. g. placed along and/or attached to the inner walls of the thermowell and/or in close proximity to one or more sealing barriers and/or connections of the sensing assembly towards the process environment.

The combination of a purging gas and at least one adsorbing unit at least partially comprised of a getter material features several distinct advantages with respect to the state of the art: First, at a point in time, at which the adsorbing unit is saturated or passivated by the reactive gases, the gas flow means still enable to protect the inner part/parts of the sensor. Second, typical getter materials often comprise e. g. tantalum, titanium, niobium, or cerium, and accordingly are rather expensive. The simultaneous integration of purging gas means and getter materials is cost efficient, because less getter materials need to be incorporated compared to a sensing assembly solely equipped with getter materials. Further, with increased time, getter materials, at least their surfaces, may at least partially become saturated or passivated so that the getter materials cease to scavenge gas. In this case, activation or reactivation of the getter materials becomes necessary, which often is achieved by at least partially heating up the getter material and which by means of the present invention becomes possible in an especially efficient manner as will be discussed below. By employing an adsorbing unit in the form of a solid body, a straightforward positioning at the relevant positions inside the sensing assembly becomes possible. This is not only helpful in terms of binding reactive gases directly at the relevant locations but also in terms of activation or reactivation of the adsorbing unit in order to increase their lifetimes.

Similarly, an inert purging gas may still contain a small quantity of oxygen or another reactive gas. Furthermore, reactive gases that enter the intermediate chamber inside the thermowell - e. g. due to the fact that the thermowell's materials may become porous at high temperature - while the thermometer is operated, are also present in the purging gas flow. Accordingly, as already discussed, damage of the sensing assembly by means of a purging gas flow can only be prevented for a limited amount of time. By means of the adsorbing unit, it is possible to maintain or even increase the purity of the purge gas over a large period of time. Thereby, both initial impurities present as well as impurities due to the process media are regarded. Accordingly, typical life times of a sensing assembly according to the present invention, are highly increased, e. g. up to several months.

According to one advantageous embodiment of the sensing assembly the fitting at least partially consists of a ceramic, preferably a refractory ceramic, or of an electrically insulating material.

In another advantageous embodiment, the protective tube at least partially consists of a ceramic or metallic material, in particular stainless steel or a nickel alloy. In a particular advantageous embodiment, the gas conduit means at least for a limited amount of time serve for maintaining the pressure at least inside the intermediate chamber at a constant predetermined pressure value, which is higher than a threshold pressure value, e.g. of a process medium in a reactor. The gas-inlet and gas-outlet can e. g. be valves or similar means for controlling a gas flow.

Many different types of the gas conduit means can be realized with respect to the present invention which all shall fall under its scope. Both open-loop, involving a gas line for purging gas supply, and closed-loop systems, like e. g. described in EP2884250 A1, are possible. One preferred embodiment involves that the measuring insert is replaceable without the need of shutting down the process. This means the sensing assembly, and in particular the gas conduit means, is/are embodied according to one of the embodiments of one of the European patent applications EP2884251 A1 and/or EP3012606 A1 to which reference was made.

In another particular advantageous embodiment the gas conduit means at least for a limited amount of time serve for maintaining the pressure at least inside the intermediate chamber at a constant predetermined pressure value, which is lower than a threshold pressure value, e.g. of a process medium in a reactor. Preferably, the gas conduit means is provided with means for pumping at least the intermediate chamber in order to create a vacuum therein. This embodiment is especially advantageous for activation or reactivation, i.e. removing of a saturated or passivated surface layer of the adsorbing unit. For enabling desorption of the gases bound to the surface of the adsorbing unit, the sensing assembly may at least partially be heated up. By evacuating at least the intermediate chamber at least while heating up at least partially the sensing assembly, in particular the desorbing gases are pumped away from the adsorbing unit and away from the inner part/parts of the sensor.

According to one advantageous embodiment, the adsorbing unit is at least partially composed of a non evaporable getter (NEG), such as for instance an alloy including zirconium, titanium, vanadium, iron and/or aluminum. The alloy is preferably adapted to the requirements of the application of the sensing assembly, e. g. with respect to the process temperature range and/or the expected types of reactive gases being present.

In one advantageous embodiment the adsorbing unit has a cylindrical, lamellar, discoidal, spherical or ring shape. The geometric dimensions of the adsorbing unit are thereby in conformity with the geometric dimensions of the other parts of the sensing assembly, in particular the thermowell and measuring insert. In a further embodiment the adsorbing unit is positioned in close proximity to the gas-inlet and/or gas-outlet. According to the present invention, it is preferred to position the adsorbing unit such that it at least partially surrounds the measuring insert. Preferably, the adsorbing unit is placed in close proximity to the sensitive part/parts of the measuring insert, e. g. a thermocouple.

According to one advantageous embodiment the absorbing unit essentially has a cylindrical or discoidal shape with its cross-section essentially corresponding to the inner diameter of the protective tube, wherein at least one notch along the surface area parallel to the longitudinal axis of the protective tube is provided. By means of the at least one notch it is ensured that the intermediate chamber remains one interconnected volume through which the purging gas flows.

According to another advantageous embodiment, the fitting and/or the adsorbing unit has/have at least one opening or at least one recess. The at least one opening or recess preferably serves for receiving the measuring insert. The opening or recess thus serves as a feedthrough for the measuring insert. In case of an adsorbing unit of essentially cylindrical or discoidal shape such opening or recess is preferably realized by means of a bore.

It is preferable, if the measuring insert has a rod like form in which at least one sensor element, preferably a temperature probe, preferably comprising at least one cable or wire, is arranged, preferably at the tip of the measuring insert, which preferably has the form of an elongated member. However, multi-probe measuring inserts are also feasible, which contain more than one measuring points.

With regard to the measuring inset, it is also preferred, if the measuring insert has a metallic outer sheath, which is filled with an insulating material, and in which the sensor element, and preferably connection wires of the sensor element, are embedded.

Additionally, it is preferred, if the at least one sensor element is a thermocouple or a resistance element.

One advantageous embodiment of the sensing assembly involves, that the protective tube is manufactured such that it protects the at least one fitting and measuring insert against at least one process condition, e. g. high pressure, temperature, friction or corrosion.

The sensing assembly is preferably used for high temperature applications, preferably for sensing temperatures above 500°C. It is also preferably used in processes, where reactive gases, like e. g. oxygen, hydrogen sulfide or sulfur oxides are present.

The object of the present invention is further achieved by a method for activating or reactivating of the getter material of a sensing assembly according to the present invention, comprising the steps of
1) placing the adsorbing unit at least partially inside the intermediate chamber,
2) producing a vacuum of essentially at least 10⁻²mbar by means of the gas-inlet and/or gas-outlet at least inside the intermediate chamber,
3) flowing a purging gas, preferably an inert gas, at a predetermined pressure value, which is higher than a threshold pressure value, e.g. of a process medium in a reactor, at least through the intermediate chamber
4) repeating steps 2) and 3) at least one more time, and
5) activating the adsorbing unit by heating the sensing assembly to a predetermined temperature.

In this concern, it is preferred, if the gas conduit means is provided with means for pumping at least the intermediate chamber in order to create the vacuum therein. It is also preferred, if activation or reactivation, which is activation of the adsorbing unit after it was already at least once operated in a hostile environment, of the adsorbing unit is carried out, while at least the intermediate chamber is pumped.

It is noted, that the embodiments described in relation to the sensing assembly are mutatis mutandis applicable for the method.

The invention will further be explained on the basis of the following figures. Without loss of generality, all embodiments shown relate to the particular case of a temperature measuring assembly with a temperature probe in the form of a thermocouple.
Fig. 1 shows an overview of a temperature measuring assembly with gas-conduit means,
Fig. 2 shows a first embodiment of the present invention (a) indicating a preferred location for the adsorbing units within the sensing assembly and (b) of the adsorbing unit itself, and
Fig. 3 shows a second embodiment of the present invention (a) indicating a preferred location for the adsorbing units within the sensing assembly and (b) of the adsorbing unit itself.

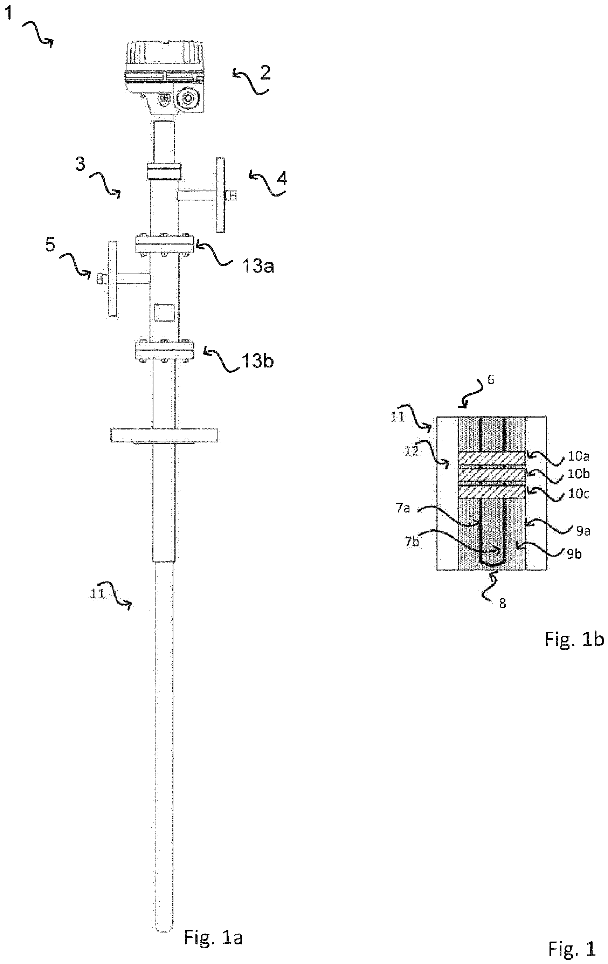

In Fig. 1a a schematic drawing of a sensing assembly 1 for sensing temperature is shown, as it may be used in a process plant. In the upper part a terminal head 2 of the sensing assembly is arranged, in which e. g. electronics for e. g. power supply and/or signal processing and/or providing measurement values may be placed. The device 1 is equipped with gas conduit means 3 including a gas-inlet 4 and a gas-outlet 5, here, but not generally necessary, both in the form of a valve. It shall be assumed, that via the gas conduit means 3 of the present and following embodiments it is possible to maintain either a pressure at a constant predetermined pressure value above or below a certain threshold pressure value, e. g. of the process. For this purpose, the gas conduit means may be equipped with means for pumping at least the intermediate chamber in order to create a vacuum therein.

For simplicity, for the following a gas conduit means 3 as described in one of the applications EP2884251 A1 or EP3012606 A1 shall be assumed. However, it should be noted, that of course also other constructions of the gas conduit means 3 readily known for those skilled in the art are feasible and fall under the scope of the present invention.

The measuring insert 6 as shown in more detail in Fig. 1b is a thermocouple with two thermocouple wires 7a, 7b, which in turn are connected at a hot junction 8 at the tip of the measuring insert 6, at which position temperature is to be measured. The thermocouple wires 7a, 7b are surrounded by a sheath 9a and further may be embedded in an insulation 9b. They are surrounded by an arrangement of multiple pre-formed fittings 10a-10c, which have the form of cylindrical blocks and are stacked upon each other.

The measuring insert 6 and the pre-formed fittings 10a-10c are positioned within an inner cavity of a protective tube 11 such, that an intermediate chamber 12 is formed for flowing of the purging gas. Continuous operation of the sensing assembly 1 in hostile environments, in particular for high temperatures, can cause serious damage of the measuring insert. In particular corrosion of the thermocouple wires as a consequence of chemically active gases entering the intermediate chamber 12 between the protective tube 11 and the measuring insert 6, frequently arises even in presence of a purging gas. This can for instance be due to the fact that the protective tube 11 may become partly porous at high temperatures, that sealing barriers, e.g. 13a, 13b are not completely tight, or may also be caused by impurities of the purging gas itself.

To avoid such problems, the present inventions suggests the further implementation of at least one adsorbing unit 14, at least partially comprised of a getter material as described above. In the following, two preferred embodiments of the adsorbing unit 14 according to the present invention and their arrangement within the sensing assembly 1 are shown. However, it should be noted, that many other embodiments are feasible and also fall under the scope of the present invention. In particular, while the subsequently described embodiments refer to an adsorbing unit in the form of a solid body, an adsorbing unit in the form of e. g. a thin film or coating is also feasible. Depending on the location at which the adsorbing unit is placed within the sensing assembly, and depending on the application of the sensing assembly, different considerations need to be made e. g. with respect to the chosen geometries and materials. Different types of getter materials do have different activation temperatures. Further, not all types of getter materials can be handled and fabricated by the same methods and shaped in a similar manner.

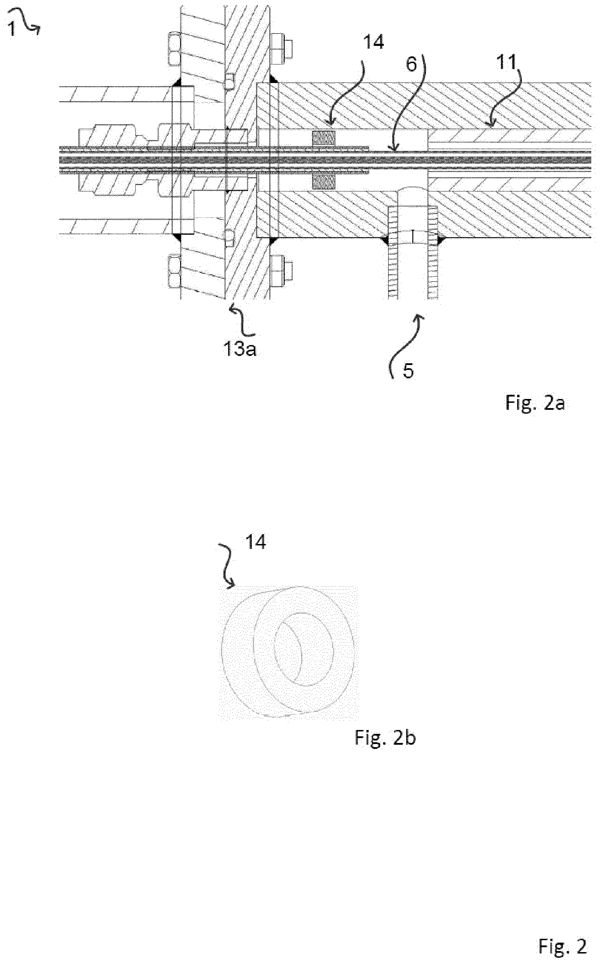

For the first preferred embodiment, as shown in Fig. 2, the adsorbing unit 14 is positioned in close proximity to the gas-outlet 5. An arrangement in close proximity to the gas-inlet 4 is also possible and fully analog to the arrangement in Fig. 2. However, the positioning of the at least one adsorbing unit 14 in close proximity to the gas-outlet 5 may be preferred, because the gas-outlet 5 represents a, eventually direct, connection towards the process. It is more likely that active gases enter the intermediate chamber 12 via the gas-outlet 5. Fig. 2a shows a detail of the sensing assembly of Fig. 1, wherein the adsorbing unit 14 is surrounding the measuring insert 6. For this purpose, the adsorbing unit 14 as shown in Fig. 2b in greater detail consists of a discoidal element made by a getter material.

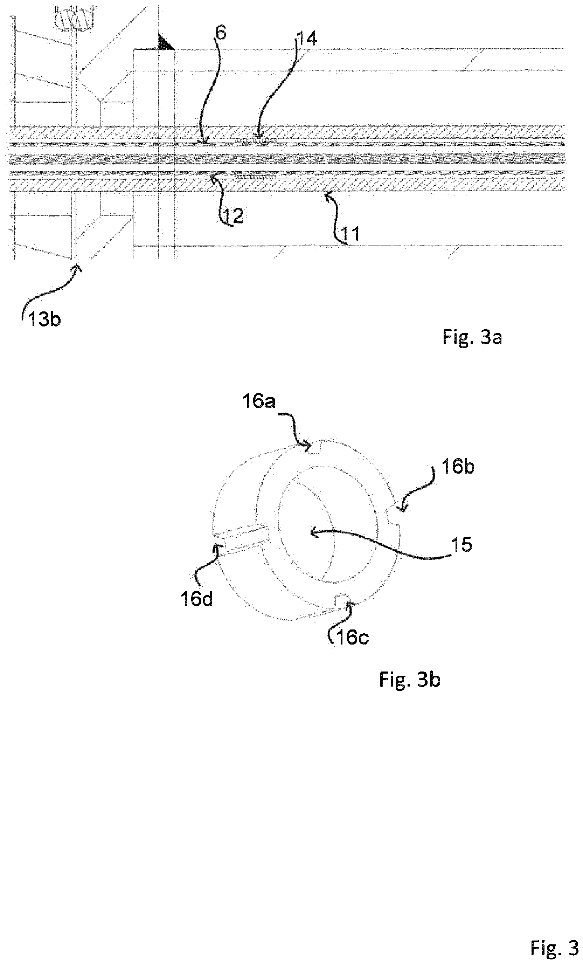

The second preferred embodiment as shown in Fig. 3 comprises an adsorbing unit positioned such that it surrounds the measuring insert 6 inside the protective tube 11. Fig. 3a shows again a relevant detail of the sensing assembly 1 in order to indicate the preferred location of the adsorbing unit 14. Elements with reference signs that already were discussed in connection with one of the former figures are not explained again.

A detailed drawing of the adsorbing unit 14 is shown in Fig. 3b. The adsorbing unit 14 again has an essentially discoidal shape with an opening 15 for receiving the measurement insert 6. Additionally, four notches 16a-16d along the surface area parallel to the longitudinal axis of the protective tube 11 are provided for enabling gas flow of the purging gas through the intermediate chamber 12. It should be noted, that the number of notches 16a-16d is not necessarily limited to the number of four. The number of notches 16a-16d depends on the chosen geometry of the adsorbing unit and its arrangement inside the protective tube 11.

### List of reference characters

- 1: sensing assembly
- 2: terminal head
- 3: gas conduit means
- 4: gas-inlet
- 5: gas-outlet
- 6: measuring insert
- 7a,7b: thermocouple wires
- 8: hot junction
- 9: sheath with insulation
- 10a-10c: pre-formed fittings
- 11: protective tube
- 12: intermediate chamber
- 13a,13b: sealing barriers
- 14: adsorbing unit
- 15: opening
- 16a-16d: notches

## Claims

1. Sensing assembly (1) for sensing a temperature,
at least comprising
- one measuring insert (6) for sensing a temperature, wherein the measuring insert (6) has a rod like form in which at least one sensor element (7a,7b,8) in the form of a temperature probe is arranged
- one, preferably pre-formed, fitting (10a-10c) at least partially surrounding the measuring insert (6),
- one protective tube (11), wherein the measuring insert (6) and the pre-formed fitting (10a-10c) are positioned within an inner cavity of the protective tube (11) such that an intermediate chamber (12) is formed, and
- gas conduit means (3) comprising at least a gas-inlet (4) and a gas-outlet (5) both at least connected to the intermediate chamber (12), wherein at least the intermediate chamber (12) can be purged by means of a purging gas via the gas conduit means,
**characterized in that**
the sensing assembly (1) comprises at least one adsorbing unit (14), which is at least partially comprised of a getter material, and positioned at least partially surrounding the measuring insert (6).

2. Sensing assembly (1), as claimed in claim 1, wherein the fitting (10a-10c) at least partially consists of a ceramic, preferably a refractory ceramic, or of an electrically insulating material.

3. Sensing assembly (1), as claimed in claim 1 or claim 2, wherein the protective tube (11) at least partially consists of a ceramic or metallic material, in particular stainless steel or a nickel alloy.

4. Sensing assembly (1), as claimed in at least one of the preceding claims, wherein the gas conduit means (3) at least for a limited amount of time is configured to maintain the pressure at least inside the intermediate chamber (12) at a constant predetermined pressure value.

5. Sensing assembly (1), as claimed in at least one of the preceding claims, wherein the adsorbing unit (14) is at least partially composed of a non evaporable getter (NEG), such as for instance an alloy including zirconium, titanium, vanadium, iron and/or aluminum.

6. Sensing assembly (1), as claimed in at least one of the preceding claims, wherein the adsorbing unit (14) has a cylindrical, lamellar, discoidal, spherical or ring shape.

7. Sensing assembly (1), as claimed in at least one of the preceding claims, wherein the adsorbing unit (14) is positioned in close proximity to the gas-inlet (4) and/or gas-outlet (5).

8. Sensing assembly (1), as claimed in at least one of the preceding claims, wherein the absorbing unit (14) has essentially a cylindrical or discoidal shape with its cross-section essentially corresponding to the inner diameter of the protective tube (11), wherein at least one notch (16a-16d) along the surface area parallel to the longitudinal axis of the protective tube (11) is provided.

9. Sensing assembly (1), as claimed in at least one of the preceding claims, wherein the fitting (10a-10c) and/or the adsorbing unit (14) has/have at least one opening (15) or at least one recess.

10. Sensing assembly (1), as claimed in at least one of the preceding claims, wherein the measuring insert (6) comprises at least one cable or wire (7a,7b), which is arranged preferably at the tip of the measuring insert (6).

11. Sensing assembly (1), as claimed in at least one of the preceding claims, wherein the measuring insert (6) has a metallic outer sheath (9a), which is filled with an insulating material (9b), and in which the sensor element (7a,7b,8), and preferably connection wires (7a,7b) of the sensor element (7a,7b,8), are embedded.

12. Sensing assembly (1), as claimed in claim 10, wherein the at least one sensor element (7a,7b,8) is a thermocouple or a resistance element.

13. Method for activating or reactivating the getter material of a sensing assembly (1) according to at least one of the claims 1-14,
**characterized in that**
it comprises the steps of
1) placing the adsorbing unit (14) at least partially inside the intermediate chamber (12),
2) producing a vacuum of essentially at least 10⁻² mbar by means of the gas-inlet (4) and/or gas-outlet (5) at least inside the intermediate chamber,
3) flowing a purging gas, preferably an inert gas, at a predetermined pressure value, which is higher than a threshold pressure value, e.g. of a process medium in a reactor at least through the intermediate chamber (12),
4) repeating steps 2) and 3) at least one more time, and
5) activating the adsorbing unit (14) by heating the sensing assembly (1) to a predetermined temperature.

## Patentansprüche

1. Abtastbaugruppe (1) zur Erfassung einer Temperatur,
mindestens Folgendes umfassend:
- einen Messeinsatz (6) zur Erfassung einer Temperatur, wobei der Messeinsatz (6) eine stabartige Form hat, in der mindestens ein Sensorelement (7a,7b, 8) in Form eines Temperaturfühlers angeordnet ist
- ein, vorzugsweise vorgeformtes, Anschlussstück (10a-10c), das mindestens teilweise den Messeinsatz (6) umgibt,
- ein Schutzrohr (11), wobei der Messeinsatz (6) und das vorgeformte Anschlussstück (10a-10c) innerhalb einer inneren Kavität des Schutzrohrs (11) liegen, so dass eine Zwischenkammer (12) gebildet wird,
und
- Gasleitungsmittel (3), umfassend mindestens einen Gaseinlass (4) und einen Gasauslass (5),
beide mindestens an der Zwischenkammer (12) angeschlossen, wobei mindestens die Zwischenkammer (12) mittels eines Spülgases über die Gasleitungsmittel gespült werden kann,
**dadurch gekennzeichnet, dass**
die Abtastbaugruppe (1) mindestens eine Adsorptionseinheit (14) umfasst, die mindestens teilweise aus einem Gettermaterial besteht und so positioniert ist, dass sie mindestens teilweise den Messeinsatz (6) umgibt.

2. Abtastbaugruppe (1) nach Anspruch 1,
wobei das Anschlussstück (10a-10c) mindestens teilweise aus einem keramischen, vorzugsweise einem feuerfesten keramischen, oder einem elektrisch isolierenden Material besteht.

3. Abtastbaugruppe (1) nach Anspruch 1 oder Anspruch 2,
wobei das Schutzrohr (11) mindestens teilweise aus einem keramischen oder metallischen Material, insbesondere Edelstahl oder eine Nickellegierung, besteht.

4. Abtastbaugruppe (1) nach mindestens einem der vorhergehenden Ansprüche,
wobei die Gasleitungsmittel (3) so konfiguriert sind, dass sie mindestens über einen beschränkten Zeitraum den Druck mindestens innerhalb der Zwischenkammer (12) auf einem konstanten, vordefinierten Druckwert halten.

5. Abtastbaugruppe (1) nach mindestens einem der vorhergehenden Ansprüche,
wobei die Adsorptionseinheit (14) mindestens teilweise aus einem nicht verdampfbaren Getter (NEG) besteht, wie beispielsweise einer Legierung mit Zirconium, Titan, Vanadium, Eisen und/oder Aluminium.

6. Abtastbaugruppe (1) nach mindestens einem der vorhergehenden Ansprüche,
wobei die Adsorptionseinheit (14) eine Zylinder-, Lamellen-, Scheiben-, Kugel- oder Ringform aufweist.

7. Abtastbaugruppe (1) nach mindestens einem der vorhergehenden Ansprüche,
wobei die Adsorptionseinheit (14) in direkter Nähe zum Gaseinlass (4) und/oder Gasauslass (5) angebracht ist.

8. Abtastbaugruppe (1) nach mindestens einem der vorhergehenden Ansprüche,
wobei die Adsorptionseinheit (14) im Wesentlichen eine Zylinder- oder Scheibenform aufweist und ihr Querschnitt im Wesentlichen dem Innendurchmesser des Schutzrohrs (11) entspricht, wobei mindestens eine Kerbe (16a-16d) entlang des Oberflächenbereichs parallel zur Längsachse des Schutzrohrs vorgesehen ist.

9. Abtastbaugruppe (1) nach mindestens einem der vorhergehenden Ansprüche,
wobei das Anschlussstück (10a-10c) und/oder die Adsorptionseinheit (14) über mindestens eine Öffnung (15) oder mindestens eine Aussparung verfügt.

10. Abtastbaugruppe (1) nach mindestens einem der vorhergehenden Ansprüche,
wobei der Messeinsatz (6) mindestens ein Kabel oder einen Draht (7a,7b) umfasst, das oder der vorzugsweise an der Spitze des Messeinsatzes (6) angeordnet ist.

11. Abtastbaugruppe (1) nach mindestens einem der vorhergehenden Ansprüche,
wobei der Messeinsatz (6) über eine metallische Außenumhüllung (9a) verfügt, die mit einem isolierenden Material (9b) gefüllt ist und in der das Sensorelement (7a,7b, 8) und vorzugsweise Verbindungsdrähte (7a, 7b) des Sensorelements (7a,7b, 8) eingebettet sind.

12. Abtastbaugruppe (1) nach Anspruch 10,
wobei das mindestens eine Sensorelement (7a,7b, 8) ein Thermoelement oder eine Widerstandseinheit ist.

13. Verfahren für die Aktivierung oder Re-Aktivierung des Gettermaterials einer Abtastbaugruppe (1) nach mindestens einem der Ansprüche 1-14,
**dadurch gekennzeichnet, dass**
es folgende Schritte umfasst:
1) Positionierung der Adsorptionseinheit (14) mindestens teilweise in der Zwischenkammer (12),
2) Erzeugen eines Vakuums von im Wesentlichen mindestens 10⁻² mbar mittels des Gaseinlasses (4) und/oder Gasauslasses (5) mindestens in der Zwischenkammer,
3) Durchströmen eines Spülgases, vorzugsweise eines inerten Gases, bei einem vordefinierten Druckwert, der höher ist als ein Schwellendruckwert, z. B. eines Prozessmediums in einem Reaktor, mindestens durch die Zwischenkammer (12),
4) Wiederholung der Schritte 2) und 3) mindestens ein zweites Mal und
5) Aktivierung der Adsorptionseinheit (14) durch Erwärmung der Abtastbaugruppe (1) auf eine vordefinierte Temperatur.

## Revendications

1. Ensemble de détection (1) destiné à la détection d'une température, comprenant au moins les éléments suivants :
- un insert de mesure (6) destiné à détecter une température, l'insert de mesure ayant une forme de tige, dans laquelle au moins un élément capteur (7a, 7b, 8) est disposé sous la forme d'une sonde de température
- un raccord (10a-10c), de préférence préformé, entourant au moins partiellement l'insert de mesure (6),
- un tube de protection (11), dans lequel l'insert de mesure (6) et le raccord préformé (10a-10c) sont placés dans une cavité interne du tube de protection (11) de telle sorte à former une chambre intermédiaire (12),
et
- des moyens de conduction de gaz (3) comprenant au moins une entrée de gaz (4) et une sortie de gaz (5), les deux étant au minimum connectés à la chambre intermédiaire (12), ensemble pour lequel au moins la chambre intermédiaire (12) peut être purgée au moyen d'un gaz de purge via les moyens de conduction de gaz,
**caractérisé**
**en ce que** l'ensemble de détection (1) comprend au moins une unité d'adsorption (14), qui est au minimum partiellement constituée d'un matériau dégazeur et positionnée au moins partiellement autour de l'insert de mesure (6).

2. Ensemble de détection (1) selon la revendication 1,
pour lequel le raccord (10a-10c) est constitué au moins partiellement d'une céramique, de préférence une céramique réfractaire, ou d'un matériau électriquement isolant.

3. Ensemble de détection (1) selon la revendication 1 ou 2,
pour lequel le tube de protection (11) est constitué au moins partiellement d'une céramique ou d'un matériau métallique, notamment un acier inoxydable ou un alliage de nickel.

4. Ensemble de détection (1) selon au moins l'une des revendications précédentes,
pour lequel les moyens de conduction de gaz (3) sont conçus de telle sorte à maintenir pendant au moins une durée limitée la pression au moins à l'intérieur de la chambre intermédiaire (12) à une valeur de pression prédéterminée constante.

5. Ensemble de détection (1) selon au moins l'une des revendications précédentes,
pour lequel l'unité d'absorption (14) est au moins partiellement constituée d'un dégazeur non évaporable (NEG), tel que par exemple un alliage comprenant du zirconium, du titane, du vanadium, du fer et/ou de l'aluminium.

6. Ensemble de détection (1) selon au moins l'une des revendications précédentes,
pour lequel l'unité d'absorption (14) présente une forme cylindrique, lamellaire, discoïdale, sphérique ou annulaire.

7. Ensemble de détection (1) selon au moins l'une des revendications précédentes,
pour lequel l'unité d'absorption (14) est positionnée à proximité immédiate de l'entrée de gaz (4) et/ou de la sortie de gaz (5).

8. Ensemble de détection (1) selon au moins l'une des revendications précédentes,
pour lequel l'unité d'absorption (14) présente pour l'essentiel une forme cylindrique ou discoïdale avec sa section transversale correspondant pour l'essentiel au diamètre intérieur du tube de protection (11), au moins une encoche (16a-16d) étant prévue le long de la surface parallèle à l'axe longitudinal du tube de protection (11).

9. Ensemble de détection (1) selon au moins l'une des revendications précédentes,
pour lequel le raccord (10a-10c) et/ou l'unité d'adsorption (14) comporte(nt) au moins une ouverture (15) ou au moins une cavité.

10. Ensemble de détection (1) selon au moins l'une des revendications précédentes, pour lequel l'insert de mesure (6) comprend au moins un câble ou un fil (7a, 7b), qui est disposé de préférence à la pointe de l'insert de mesure (6).

11. Ensemble de détection (1) selon au moins l'une des revendications précédentes,
pour lequel l'insert de mesure (6) comporte une gaine extérieure métallique (9a), qui est remplie d'un matériau isolant (9b), et dans laquelle l'élément capteur (7a, 7b, 8), et de préférence les fils de connexion (7a, 7b) de l'élément capteur (7a, 7b, 8), sont intégrés.

12. Ensemble de détection (1) selon la revendication 10,
pour lequel l'au moins un élément capteur (7a, 7b, 8) est un thermocouple ou un élément résistif.

13. Méthode d'activation ou de réactivation du matériau dégazeur d'un ensemble de détection (1) selon au moins l'une des revendications 1 à 14,
**caractérisée**
**en ce qu'**elle comprend les étapes suivantes :
1) Placement de l'unité d'adsorption (14) au moins partiellement à l'intérieur de la chambre intermédiaire (12),
2) Production d'un vide pour l'essentiel d'au moins 10⁻² mbar au moyen de l'entrée de gaz (4) et/ou de la sortie de gaz (5) au moins à l'intérieur de la chambre intermédiaire,
3) Écoulement d'un gaz de purge, de préférence un gaz inerte, à une valeur de pression déterminée, qui est supérieure à une valeur de pression seuil, p. ex. d'un fluide de process dans un réacteur, au moins à travers la chambre intermédiaire (12),
4) Répétition des étapes 2) et 3) au moins une fois de plus, et
5) Activation de l'unité d'absorption (14) en chauffant l'ensemble de détection (1) à une température prédéterminée.
